# FASCICULE DE BREVET EUROPEEN

(11) **EP 4 387 889 B1**
(45) Date de publication et mention de la délivrance du brevet: **10.09.2025**
(21) Numéro de dépôt: 22762149.7
(22) Date de dépôt: 18.08.2022
(51) Int. Cl.: B62K 19/02, B62K 3/04, B62J 15/00, B62J 17/083, B62K 19/06, B62K 19/48

(54) **ÉLÉMENT PROFILÉ SYMÉTRIQUE AÉRODYNAMIQUE, CADRE DE VÉLO, VÉLO ET UTILISATION D'UN TEL VÉLO**
AERODYNAMISCHES SYMMETRISCHES PROFILELEMENT, FAHRRADRAHMEN, FAHRRAD UND VERWENDUNG EINES SOLCHEN FAHRRADS
AERODYNAMIC SYMMETRIC PROFILED ELEMENT, BICYCLE FRAME, BICYCLE AND USE OF SUCH A BICYCLE

(30) Priorité: 19.08.2021 BE 202100057
(43) Date de publication de la demande: 26.06.2024
(73) Titulaire: Rutten Herstal SRL, 4670 Blégny (Mortier) (BE)
(72) Inventeur: RUTTEN, Jean, 4670 Blégny (Mortier) (BE)
(74) Mandataire: Powis de Tenbossche, Roland
(86) Numéro de dépôt international: PCT/IB2022/057734
(87) Numéro de publication internationale: WO 2023/021449

(56) Documents cités:
- WO-A1-2021/053352
- US-A- 5 221 102
- US-A1- 2010 253 038
- US-A1- 2020 039 601

## Description

La présente invention a pour objet un élément profilé symétrique aérodynamique pour vélos , se déplaçant à une vitesse de moins de 100km/h, tels que vélos avec assistance électrique.

Par vélos, on entend les vélos, les vélos assistés et les vélos moteurs.

De nombreux fabricants de vélos se sont intéressés à rechercher des solutions pour améliorer les performances des cyclistes. Certains constructeurs ont ainsi recherché des moyens pour réduire au maximum le poids du cadre de leurs vélos, ceci parfois au détriment de leur solidité.

D'autres constructeurs se sont intéressés à améliorer l'aérodynamisme du vélo et en particulier de l'équipage "cycliste et vélo". Ces constructeurs ont réalisé de nombreux essais en tunnel aérodynamique, pour tenter de trouver l'aérodynamisme optimal, en particulier avec vent de face.

A titre d'exemples de recherches entreprises pour améliorer l'aérodynamisme d'un vélo, référence peut être faite à :
- Timothy N. Crouch et al, "Riding against the wind: a review of competition cycling aerodynamics", Sports Eng (2017) 20:81-110, (cet article conclut que des recherches futures sont nécessaires pour améliorer les perfomances du cycliste - en 2017, améliorer les performances d'un cycliste est toujours d'actualité),
- Malizia Fabio et al, "Bicycle aerodynamics: History, state-of-the-art and future perspectives", Journal of Wind Engineering & Industrial Aerodynamycs 200, 2020 (cette étude conclut également que la complexité de l'aérodynamisme d'un vélo rencontre de nombreuses difficultés et laisse une zone de recherche et d'innovation pour améliorer l'aérodynamisme.);
- Schwabb A. et al, "Some Effects of Crosswind on the Lateral Dynamics of a Bicycle", ISEA Proceedings 2018, 2, 218 (cette étude analyse l'effet d'un vent transversal sur la stabilité d'un coureur cycliste).

Toutes ces études montrent que, malgré les nombreuses améliorations déjà apportées aux vélos, l'homme du métier est toujours à la recherche d'innovations dans le cadre de l'aérodynamisme pour les vélos, pour améliorer les performances du cycliste.

Des recherches ont également été conduites pour minimiser des effets de trainée du vélo (voir par exemple BE 2008/0357 (correspondant à US2009/0322053) ou US2010/0253038). Ledit document US2010/0253038 divulgue un élément profilé symétrique aérodynamique selon le préambule de la revendication 1. Le document US8556208 décrit un profil pour cadre de vélo en forme d'aile d'avion. le document US7322592 décrit un habillage aérodynamique pour un vélo. Le document WO2014/191417 décrit un carénage complet pour vélo.

Le demandeur connaît également une série de cadres commercialisés sous les marques Pinarello, Bianchi, Cervelo, Scott, BMC, Jamis, Trek, Ridley Bikes, Giant, Eddy Merckx, Gazelle, Peugeot, Mercedes.

Tous les profilés décrits dans ces documents ou commercialisés ne présentent pas un profilé en forme de feuille de sauge à 5 rayons tangents.

Le demandeur, suite à des recherches et de nombreux essais, a trouvé qu'en utilisant des profilés totalement particuliers en forme de feuille de sauge à 5 arcs de cercles tangents, il était possible de réduire, voire d'annuler complètement la trainée, mais de surcroit en cas de vent latéral ou incliné, d'engendrer un effort positif dans le sens d'avancement du vélo, et ce même en cas de vent de face. Cet effet est tout à fait surprenant et n'est pas décrit, ni suggéré dans l'état de la technique.

Le demandeur a ainsi remarqué dans une série d'essais, qu'en utilisant un cadre de vélo avec un profilé en feuille de sauge particulier, il a été possible avec des vents de 10km/h à 50km/h avec un angle d'incidence de 10° à 25° par rapport à la direction ou sens d'avancement du vélo de générer un effet moteur dû au vent sur le profilé particulier du cadre d'environ 5N à 10N, voire plus, ce qui se traduit alors en un apport de puissance de 30W à 60W selon la vitesse d'avancement du vélo et la vitesse du vent et son angle d'incidence. Cet effet bénéfique n'a pas été obtenu en utilisant des cadres de vélo du marché. De manière plus étonnante encore, le demandeur a remarqué lors de tests avec des vents de 10 à 50 km/h, qu'un effet moteur était toujours obtenu pour tout angle d'incidence du vent, c'est-à-dire à la fois avec un vent de travers, un vent orthogonal, un vent arrière et un vent avant , ceci même avec une faible incidence par rapport à la direction d'avancement du vélo. Le profilé en feuille de sauge particulier s'est également avéré présenter une perte par frottement réduite pour tout vent, et entre autre pour des vents de vitesse de 10 à 80km/h.

Des tests effectués par le demandeur ont démontré que lorsque l'on s'écarte de ce profilé en feuille de sauge, il n'y a plus d'effet moteur marqué par vent de côté, par exemple avec un vent de face avec une incidence de 15° ou moins.

L'effet moteur obtenu par l'invention est particulièrement intéressant pour des vélos à assistance électrique, car permettant d'économiser des Wh de la batterie, permettant ainsi une réduction de la taille de la batterie pour une aide au déplacement sur une distance donnée, une réduction du poids total du vélo avec la batterie, ou une assistance électrique sur une plus grande distance. La réduction de la taille de la batterie permet également de pouvoir mieux l'intégrer dans le cadre du vélo ou un compartiment de celui-ci, et donc de mieux la protéger des intempéries et des vols ou autres faits de vandalisme.

L'invention a ainsi pour objet un élément profilé (1) symétrique aérodynamique pour vélo à roues (V) présentant, en section transversale perpendiculaire au plan de symétrie (12), au moins 90% de la partie centrale d'un profilé à au moins 5 arcs de cercle, dit en feuille de sauge, avec un rapport écartement maximal (E) mesuré perpendiculairement au plan de symétrie (12) / corde (C) mesurée dans le plan de symétrie (12) compris entre 0,1 et 0,3. Ledit profilé est adapté pour créer une force toujours orienté vers le bord d'attaque ou avant du profilé pour toutes les résultantes combinant la vitesse du vent et la vitesse d'avancement du vélo.

L'invention a ainsi pour objet un élément profilé symétrique aérodynamique pour vélo (V) à roues adapté à se déplacer au moins sur une surface définissant un plan de roulement horizontal à une vitesse de moins de 100km/h, en particulier pour vélo à assistance électrique, ledit élément profilé (1,2,3,4) présentant un plan de symétrie (12) et une extrémité avant courbe (10) avec au moins un bord d'attaque, dans lequel en position de l'élément profilé avec le plan de symétrie (12) situé dans un plan vertical, ledit élément profilé (1,2,3,4) présente l'extrémité avant courbe (10), une extrémité arrière (11), et de par et d'autre dudit plan de symétrie vertical (12), une face extérieure courbe (13,14), lesdites faces extérieures courbes (13,14) définissant en section transversale dans un plan perpendiculaire au plan de symétrie (12) et parallèle audit plan de roulement, un profil aérodynamique (15), dans lequel au moins pour une partie de l'élément profilé (1,2,3,4), l'élément profilé présente en section transversale perpendiculaire au plan de symétrie (12) et parallèle audit plan de roulement (H), le profil aérodynamique (15) présentant au moins 90% de la partie centrale d'un profil en feuille de sauge avec un rapport écartement maximal (E) mesuré perpendiculairement au plan de symétrie (12) / corde maximale (C) mesurée dans le plan de symétrie (12) compris entre 0,1 et 0,3, avantageusement entre 0,1 et 0,25, et
dans lequel ledit profil aérodynamique (15) avec un rapport écartement maximal (E) / corde maximale (C) compris entre 0,1 et 0,3, avantageusement entre 0,1 et 0,25 comprend deux formes ou faces courbes symétriques (13,14) par rapport audit plan de symétrie sensiblement vertical (12), chaque forme ou face courbe (13,14) desdites deux formes ou faces courbes symétriques (13,14) étant formée en section transversale entre un premier point avant (16) et un deuxième point arrière (17), lesdits premier point et deuxième point (16,17) s'étendant le long d'un axe de symétrie (AX) du plan de symétrie (12) parallèle audit plan de roulement horizontal (H).

Selon l'invention, l'élément profilé est caractérisé en ce que:
* chaque forme ou face courbe (13,14) desdites deux formes ou faces courbes symétriques (13,14) dudit profil aérodynamique (15) est définie en section transversale sensiblement par 5 à 10 arcs de cercles successifs, avantageusement 5 ou 6 ou 7 arcs de cercles successifs, de préférence 5 arcs de cercle successifs (A1 du cercle C1,A2 du cercle C2,A3 du cercle C3,A4 du cercle C4,A5 du cercle C5), lesdits arcs de cercle successifs (A1,A2,A3,A4,A5) étant tangents intérieurs deux à deux et de rayon de courbure (R1,R2,R3,R4,R5) croissant avec un rayon de courbure minimal (R1) pour la partie courbe au voisinage de l'extrémité avant (16) et un rayon de courbure maximal (R5) pour la partie courbe au voisinage de l'extrémité arrière (17), l'arc de cercle (A1) de l'extrémité avant passant par le point avant (16) étant défini avec un centre de courbure (CC1) situé le long dudit axe de symétrie (AX) du plan de symétrie (12) et avec un premier rayon de courbure (R1) compris entre 0,2 et 0,3 fois l'écartement maximal (E),
* ladite section transversale pour ladite au moins une partie de l'élément profilé (1,2,3,4) est au moins à 95% sensiblement une section transversale définie par lesdits cinq arcs de cercles successifs, pour laquelle, par rapport au rayon de courbure (R1) du premier arc de cercle (A1),

le deuxième arc de cercle (A2) a un rayon de courbure (R2) compris entre 1,8 et 2,2 fois le premier rayon de courbure (R1);
le troisième arc de cercle (A3) a un rayon de courbure (R3) compris entre 8,5 et 10,5 fois le premier rayon de courbure (R1);
le quatrième arc de cercle (A4) a un rayon de courbure (R4) compris entre 25 et 30 fois le premier rayon de courbure (R1); et
le cinquième arc de cercle (A5) a un rayon de courbure (R5) compris entre 50 et 70 fois le premier rayon de courbure (R1).

Selon des formes avantageuses de réalisation, l'élément profilé selon l'invention présente une ou plusieurs des caractéristiques suivantes :
* les cercles définissant les 5 arcs de cercles sont des cercles tangents intérieurs deux à deux, le premier cercle (C1) définissant le premier arc de cercle (A1) étant tangent intérieur au deuxième cercle (C2), le deuxième cercle (C2) définissant le deuxième arc de cercle (A2) étant tangent intérieur au troisième cercle (C3), le troisième cercle (C3) définissant le troisième arc de cercle (A3) étant tangent intérieur au quatrième cercle (C4), et le quatrième cercle (C4) définissant le quatrième arc de cercle (A4) étant tangent intérieur au cinquième cercle (C5) définissant le cinquième arc de cercle (A5), lesdits cercles tangents intérieurs définisant une série de points de tangence distincts (T1,T2,T3,T4).
* en section transversale perpendiculaire au plan de symétrie (12) pour ladite au moins une partie de l'élément profilé (1,2,3,4), le profil aérodynamique (15) présente au moins 95% de la partie centrale d'un profil en feuille de sauge avec un rapport écartement maximal (E) mesuré perpendiculaire au plan vertical de symétrie (12) / corde maximale (C) mesurée dans le plan vertical de symétrie (12) compris entre 0,2 et 0,25.
* l'élément profilé (1,2,3,4) est au moins partiellement creux.
* par rapport au plan de symétrie vertical (12) pour le vélo (V) avec ses roues prenant appui sur le plan de roulement horizontal (H), l'élément profilé (1,2,3,4) présente au moins :
   * une première portion de l'élément profilé (3) comprise entre, d'une part, un plan inférieur (P1) de coupe de l'élément profilé (3), ledit plan inférieur (P1) étant parallèle au plan de roulement (H), et d'autre part, un premier plan intermédiaire (P2) de coupe de l'élément profilé (3) parallèle au plan inférieur (P1) de coupe, et
   * une deuxième portion de l'élément profilé (3) comprise entre, d'une part, le premier plan intermediaire (P2) ou un éventuel deuxième plan intermédiaire (P2) de coupe parallèle au plan inférieur (P1) et différent du premier plan intermédiaire (P2), et, d'autre part, un plan supérieur (P3) de coupe de l'élément profilé (3) parallèle au plan inférieur (P1) de coupe,

   dans lequel le premier plan intermédiaire (P2) s'étend entre le plan inférieur (P1) et le plan supérieur (P3), tandis que l'éventuel deuxième plan intermédiaire s'étend entre le premier plan intermédiaire (P2) et le plan supérieur (P3);
   dans lequel ladite première portion de l'élément profilé (3) présente, pour chaque plan de coupe parallèle au plan inférieur (P1) compris entre le plan inférieur (P1) de coupe et le premier plan intermédiaire (P2) de coupe, d'une part, une section transversale en feuille de sauge sensiblement constante avec une corde (C) mesurée dans le plan de symétrie vertical (12) et, d'autre part, un écartement (E) mesuré perpendiculairement au plan de symétrie vertical (12) sensiblement constant, avec un rapport écartement maximal (E) mesuré perpendiculairement au plan vertical de symétrie (12) / corde maximale (C) mesurée dans le plan vertical de symétrie (12) compris entre 0,1 et 0,3, avantageusement entre 0,1 et 0,25, de préférence entre 0,2 et 0,25.

De préférence, la deuxième portion de l'élément profilé (3) présente, pour chaque plan de coupe parallèle au plan inférieur (P1) compris entre le premier ou deuxième plan intermédiaire et le plan supérieur (P3):
* une section transversale en feuille de sauge qui varie de manière continue entre
   - une section transversale maximale en feuille de sauge le long du premier ou deuxième plan intermédiaire de coupe (P2) avec une corde maximale (C) mesurée dans le plan de symétrie vertical (12) et un écartement maximal (E) mesuré perpendiculairement au plan de symétrie vertical (12), et
   - une section transversale minimale en feuille de sauge le long du plan supérieur de coupe (P3) avec une corde minimale (C') mesurée dans le plan de symétrie vertical (12) inférieure à la corde maximale (C) et un écartement minimal (E') inférieur à l'écartement maximal (E),
   chaque section transversale en feuille de sauge présentant un rapport écartement maximal (E,E') mesuré perpendiculairement au plan de symétrie / corde maximale mesurée (C,C') dans le plan de symétrie (12) compris entre 0,1 et 0,3, avantageusement entre 0,1 et 0,25, de préférence entre 0,2 et 0,25.
* avec le vélo (V) en position debout avec les roues prenant appui sur le plan de roulement horizontal, il présente:
   - le plan de symétrie vertical (12) et
   - au moins une portion s'étendant entre un premier plan horizontal perpendiculaire audit plan de symétrie vertical (12) et un deuxième plan horizontal perpendiculaire audit plan de symétrie vertical (12), ladite portion se caractérisant par une section transversale horizontale sensiblement constante sensiblement en feuille de sauge définie avec sensiblement une même longueur de corde (C) mesurée dans le plan de symétrie vertical (12) et un même écartement (E) mesuré perpendiculairement au plan de symétrie vertical (12).
* une combinaison de deux ou plus de deux de ces particularités.

L'invention a encore pour objet un cadre (20) de vélo (V) adapté pour supporter au moins une roue avant (21) et une roue arrière (22), ledit cadre (20) comprenant au moins :
(a) un profilé de selle (23) avec une extrémité inférieure (23A) et une extrémité supérieure (23B) adaptée à supporter une tige de selle (24),
(b) un profilé de direction (25) adapté pour recevoir une tige de direction (26) associée au moins à une fourche (27) pour la roue avant (21), et à un guidon (28),
(c) un profilé diagonal (1) reliant l'extrémité inférieure (23A) du profilé de selle (23) au profilé de direction (25), et avantageusment
(d) un profilé sensiblement horizontal (2) reliant l'extrémité supérieure (23B) du profilé de selle (23) audit profilé de direction (25),

ledit cadre (20) étant avantageusement associé à un hauban (31) et une base arrière (29) adaptés pour supporter la roue arrière (22), et/ou à une fourche (27) pour la roue avant (21), et/ou un garde boue avant (30) adapté pour couvrir au moins partiellement la partie haute de la roue avant (21), et/ou un garde boue arrière (3) adapté pour couvrir au moins partiellement la partie haute de la roue arrière (22) et ou à une coiffe (4),
ledit cadre étant essentiellement caractérisé en ce qu'au moins un élément choisi parmi le profilé de selle (23), le profilé de direction (25), le profilé diagonal (1), l'éventuel profilé sensiblement horizontal (2), l'éventuel garde boue avant (30), l'éventuel garde boue arrière (3) et l'éventuelle coiffe (4), éventuellement en combinaison entre eux, est un élément profilé symétrique aérodynamique selon l'invention, tel que décrit ci-avant.

De façon avantageuse, le cadre comporte au moins un profilé horizontal, un profilé diagonal, et un garde boue arrière qui sont chacun un élément profilé symétrique aérodynamique selon l'invention.

Selon une autre forme de réalisation particulière, le profilé diagonal (1), le profilé de selle (23) et l'éventuel profilé horizontal (2) sont intégrés dans un même élément profilé selon l'invention.

L'invention a encore pour objet un vélo comportant un cadre selon l'invention et/ou associé à un élémént profilé selon l'invention sous forme de coiffe ou coiffe partielle.

Selon une forme de réalisation particulière du vélo selon l'invention, pour lequel lorsqu'il est en position debout avec les roues prenant appui sur le plan horizontal (H), l'élément profilé symétrique aérodynamique (3) d'au moins un élément choisi parmi le profilé de selle (23), le profilé de direction (25), le profilé diagonal (1), l'éventuel profilé sensiblement horizontal (2), l'éventuel garde boue avant (30), l'éventuel garde boue arrière (3) et l'éventuelle coiffe (4), éventuellement en combinaison entre eux, présente au moins une portion avec en coupe transversale horizontale une section transversale en feuille de sauge telle que définie pour le profilé selon l'invention ci-avant.

Encore un autre objet de l'invention est l'utilisation d'un vélo à roues adapté pour se déplacer sur terre à une vitesse de moins de 100km/h dans un plan de roulement horizontal, ledit vélo comprenant au moins un élément profilé selon l'invention, en particulier au moins un cadre selon l'invention, pour générer au moins un effort moteur compris entre 2N et 10N dans le sens d'avancement du vélo par l'effet de vents sur ledit au moins un élément profilé pour au moins des vents de vitesse comprise entre 10 km/h et 80 km/li avec une incidence au moins comprise entre entre 10° et 170° par rapport à la direction d'avancement du vélo.

L'utilisation selon l'invention est une utilisation pour générer au moins un effort moteur compris entre 2N et 10N dans le sens d'avancement du vélo par l'effet de vents sur ledit au moins un élément profilé pour au moins des vents de vitesse comprise entre 10 km/h et 80 km/h avec une incidence comprise au moins dans la plage de 10° à 170° par rapport à la direction d'avancement du vélo.

Avantageusement, l'effort moteur généré engendre une puissance motrice qui est le produit de ladite force motrice par la vitesse d'avancement du cyliste.

L'invention permet donc d'utiliser le vent pour générer un effort moteur pour le vélo, que le vent vienne de face, orthogonal au déplacement, ou par vent arrière par rapport à la vitesse d'avancement du vélo, pour des vents par exemple 10 à 60 km/h. Ceci permet de réduire d'environ 10 à 40% l'effort requis par un cycliste et/ou du moteur d'assistance du vélo, permettant ainsi au cycliste une moindre fatigue et à la batterie une plus longue durée d'action. Ainsi, si la puissance d'un cycliste se déplaçant à environ 30km/h avec un vent de face de 20 à 50km/h avec un angle d'incidence de 15 à 45° par rapport au sens d'avancement est d'environ 200W avec un vélo traditionnel, la puissance requise pour le même cycliste utilisant un vélo avec un cadre selon l'invention sera réduite de 10 à 35%.

Des particularités et détails de l'invention ressortiront de la description suivante dans laquelle il est fait référence aux dessins ci-annexés.

Dans ces dessins,
- la figure 1 est une vue de côté d'un vélo suivant l'invention,
- la figure 2 est une vue en coupe le long de la ligne II-II du profilé diagonal du cadre du vélo de la figure 1,
- la figure 3 est une vue en coupe le long de la ligne III-III du profilé horizontal du cadre du vélo de la figure 1,
- les figures 4A, 4B et 4C sont des vues en coupe respectivement le long des lignes IVA, IVB et IVC du profilé horizontal du cadre du vélo de la figure 1 (voir aussi figure 3),
- la figure 5 est une vue en coupe le long de la ligne V-V du garde boue arrière du cadre du vélo de la figure 1,
- la figure 6 est une vue en coupe le long de la ligne VI-VI du garde boue arrière du cadre du vélo de la figure 1,
- la figure 7 est une vue de côté d'une coiffe de vélo,
- les figures 8 et 9 sont des vues en coupe le long des lignes VIII-VIII et IX-IX de la coiffe de la figure 7, et
- la figure 10 est une forme représentant les arcs de cercles tangents intérieurs d'une face d'un profil en feuille de sauge de l'invention.

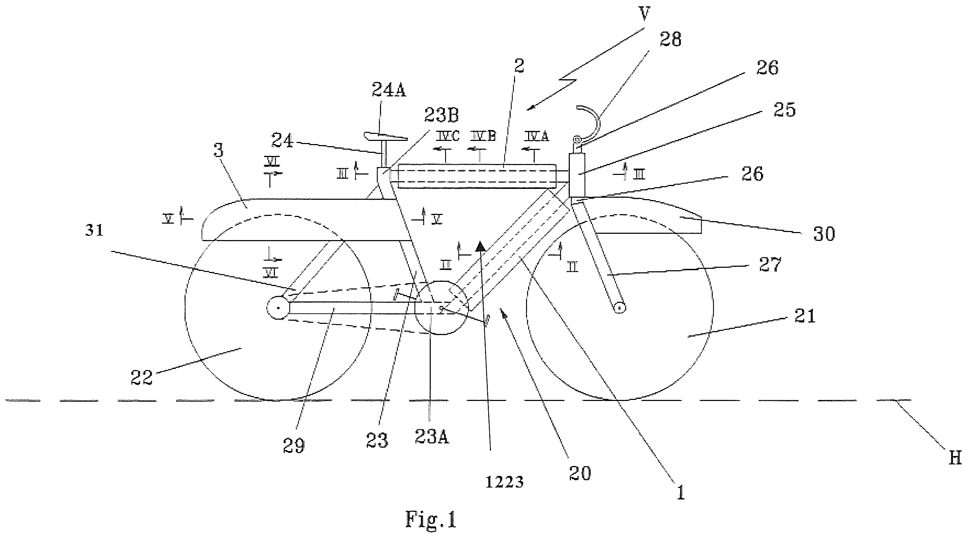

La figure 1 montre un vélo (V) avec un cadre (20) adapté pour supporter au moins une roue avant (21) et une roue arrière (22), ledit cadre (20) comprenant au moins :
(a) un profilé de selle (23) avec une extrémité inférieure (23A) et une extrémité supérieure (23B) adaptée à supporter une tige de selle (24) portant la selle (24A),
(b) un profilé de direction (25) adapté pour recevoir une tige de direction (26) associée au moins à une fourche (27) pour le roue avant (21), et à un guidon (28),
(c) un profilé diagonal (1) reliant l'extrémité inférieure (23A) du profilé de selle (23) au profilé de direction (25), (pour ce profilé diagonal , on a représenté en traits interrompus un tube d'un cadre traditionnel.),
(d) un profilé sensiblement horizontal (2) (horizontal lorsque les roues du vélo maintenu vertical ou droit prennent appui sur un plan horizontal H) reliant l'extrémité supérieure (23B) du profilé de selle (23) audit profilé de direction (25), (pour ce profilé sensiblement horizontal, on a représenté en traits interrompus un tube d'un cadre traditionnel.),
(e) un hauban (31) et une base arrière (29) adaptés pour supporter la roue arrière (22),
(f) la fourche (27) pour la roue avant (21),
(g) un garde boue avant (30) adapté pour couvrir au moins partiellement la partie haute de la roue avant (21), et
(h) un garde boue arrière (3) adapté pour couvrir au moins partiellement la partie haute de la roue arrière (22).

Le vélo comporte de manière traditionnelle un système d'entraînement, par exemple avec une chaîne, des pédales, des roues dentées, un dérailleur, et avantageusement un moteur électrique pour assister le cycliste dans son déplacement.

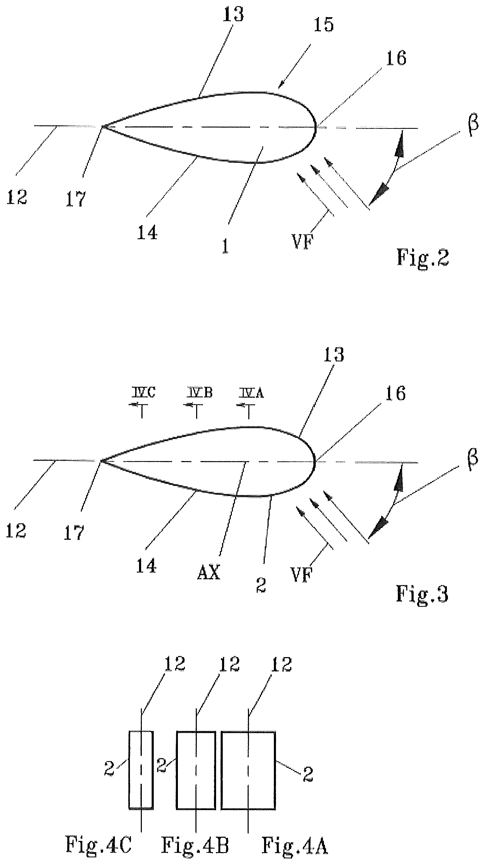

Dans ce vélo montré à titre d'exemple uniquement en tant que vélo destiné à se déplacer dans un plan horizontal à une vitesse de moins de 100km/h, par exemple à une vitesse maximale en plan horizontal H de 30 à 40km/h avec un vent de face (VF à la figure 2 ou figure 3) avec un angle d'incidence (β par rapport au plan de symétrie 12) de 5 à 175° (tel que, à titre d'exemples particuliers : 5°, 15°, 30°, 45°, 60°, 90°, 120°, 135°, 150°, 165°et 175°) (permettant alors une aide au déplacement, apte à réduire la puissance musculaire du cycliste entre 5 et 30%), le garde boue avant 30, le garde boue arrière 3, le profilé sensiblement horizontal (2) et le profilé diagonal (1) présente avantageusement profilé aérodynamique particulier en feuille de sauge.

Le profil en feuille de sauge de ces éléments présente en section transversale perpendiculaire au plan de symétrie 12, un rapport écartement maximal (E) mesuré perpendiculairement au plan de symétrie (12) / corde maximale (C) mesurée dans le plan de symétrie (12) compris entre 0,1 et 0,3, avantageusement entre 0,1 et 0,2.

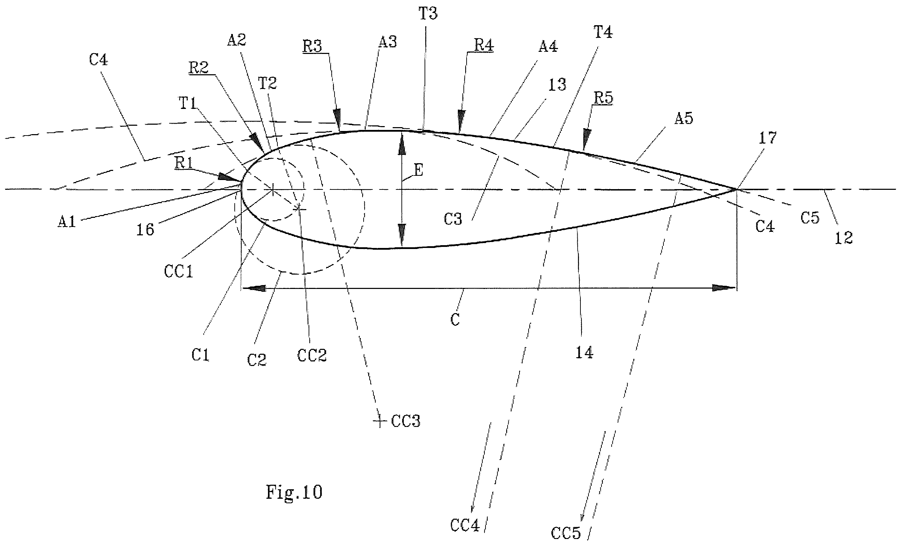

Le profil en feuille de sauge (15) de ces éléments 1,2,3,30 comprend deux formes courbes symétriques (13,14) (formant un espace creux entre elles) par rapport audit plan de symétrie sensiblement vertical 12, chaque forme courbe (13,14) étant formée entre un premier point avant (16) et un deuxième point arrière (17) s'étendant dans le plan de symétrie (12) et étant définie sensiblement par 5 arcs de cercle successifs (A1,A2,A3,A4,A5) tangents et de rayon de courbure (R1,R2,R3,R4,R5) croissant avec un rayon de courbure minimal pour la partie courbe au voisinage de l'extrémité avant (16) et un rayon de courbure maximal (R5) pour la partie courbe au voisinage de l'extrémité arrière (17), l'arc de cercle (A1) de l'extrémité avant passant par le point avant (16) étant défini avec un centre de courbure (CC1) situé dans le plan de symétrie (12) et avec un premier rayon de courbure (R1) compris entre 0,2 et 0,3 fois l'écartement maximal (E). (voir figure 10) Les centres des différents arcs de courbures ne sont pas alignés le long d'une même ligne.

Par rapport au rayon de courbure (R1) du premier arc de cercle (A1),
le deuxième arc de cercle (A2) a un rayon de courbure (R2) compris entre 1,8 et 2,2 fois le premier rayon de courbure (R1);
le troisième arc de cercle (A3) a un rayon de courbure (R3) compris entre 8,5 et 10,5 fois le premier rayon de courbure (R1);
le quatrième arc de cercle (A4) a un rayon de courbure (R4) compris entre 25 et 30 fois le premier rayon de courbure (R1); et
le cinquième arc de cercle (A5) a un rayon de courbure (R5) compris entre 50 et 70 fois le premier rayon de courbure (R1).

Les cercles C1,C2,C3,C4,C5 définissant les 5 arcs de cercles sont des cercles tangents intérieurs deux à deux, le premier cercle (C1) définissant le premier arc de cercle (A1) étant tangent intérieur au deuxième cercle (C2), le deuxième cercle (C2) définissant le deuxième arc de cercle (A2) étant tangent intérieur au troisième cercle (C3), le troisième cercle (C3) définissant le troisième arc de cercle (A3) étant tangent intérieur au quatrième cercle (C4), et le quatrième cercle (C4) définissant le quatrième arc de cercle (A4) étant tangent intérieur au cinquième cercle (C5) définissant le cinquième arc de cercle (A5), lesdits cercles tangents intérieurs définisant une série de points de tangence distincts (T1,T2,T3,T4). Les cercles C3, C4 et C5 ne sont montrés qu'en partie.

Les profilés 1 et 2 présentent chacun un plan vertical de symétrie (12) pour le vélo (V) en position debout avec les roues prenant appui sur un plan horizontal. Ce plan de symétrie vertical (12) correspond avantageusement au plan vertical de symétrie de la roue arrière (22) du vélo (V). Chaque plan de coupe horizontal (perpendiculaire au plan de symétrie vertical (12) avec le vélo V en position debout ou droite, les roues prenant appui sur un plan horizontal) desdits profilés (1 et 2) définit une section transversale présentant un axe central (AX) horizontal. Sur sensiblement toute la hauteur (verticale) de chacun des profilés (1 et 2), la section transversale dans des plans horizontaux de coupe reste sensiblement constante pour le vélo V en position debout avec les roues prenant appui sur un plan horizontal.

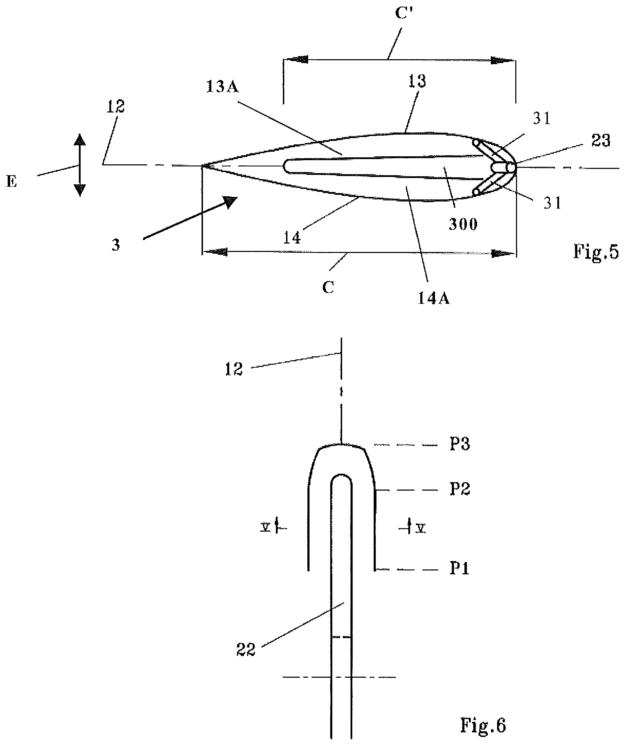

Pour le profilé (3) représenté en coupe verticale à la figure 6 et en coupe horizontale à la figure 5 (pour le vélo en position debout avec les roues prenant appui sur un plan horizontal), le profilé (3) présente un plan vertical de symétrie (12). Pour une première portion du profilé (3) s'étendant entre un plan inférieur (P1) et un plan intermédiaire (P2) (lesdits plans (P1) et (P2) étant horizontaux et perpendiculaires au plan vertical de symétrie (12) pour le vélo en position debout avec les roues prenant appui sur un plan horizontal (H) ), elle présente des faces (13 et 14) symétriques par rapport au plan vertical (12). Pour cette première portion, elle présente une section transversale horizontale (définie par les lignes 13 et 14 à la figure 5) constante entre le plan inférieur (P1) et le plan intermédiaire (P2). Cette section transversale horizontale en feuillle de sauge présente une corde (C) et un écartement (E)

Pour une deuxième portion du profilé (3) s'étendant entre le plan horizontal intermédiaire (P2) et un plan horizontal supérieur (P3) pour le vélo (V) en position debout avec les roues prenant appui sur un plan horizontal, cette deuxième portion est définie par les faces (13A) et (14A). En coupe horizontale, la section transversale en feuille de sauge de cette deuxième portion varie de manière continue entre une section transversale maximale en feuille de sauge (correspondant à la section transversale dans le plan intermédiaire (P2)) avec une corde maximale (C) et un écartement maximal (E), et une section transversale minimale en feuille de sauge (correspondant à la section transversale en feuille de sauge dans le plan supérieur (P3)) avec une corde (C') inférieure à la corde maximale (C) et un écartement (E') réduit par rapport à l'écartement maximal (E). Pour cette deuxième portion du profilé (3), la corde varie de manière continue entre une corde maximale (E) et une corde minimale (E')

Le profilé (3) est recouvert par une coiffe (300) reliant les faces (13A et 14A) de la deuxième portion, au niveau du plan supérieur (P3). (voir figures 5 et 6)

Les profilés 1, 2, 3 et 30 peuvent se présenter comme deux pièces indépendantes qui peuvent se clipser l'une à l'autre. Par exemple les profilés 1 et 2 présentent deux pièces destinées à se clipser l'une à l'autre tout en enserrant un tube d'un cadre traditionnel.

Les tubes 23, 1 et 2 (parties montrés en traits interrompus pour les référence 1 et 2 de la figure 1) peuvent être incorporés dans un seul profilé aérodynamique (3) selon l'invention. L'espace 1223 défini entre les références 1, 2 et 23 étant alors fermé par des portions de profilé selon l'invention.

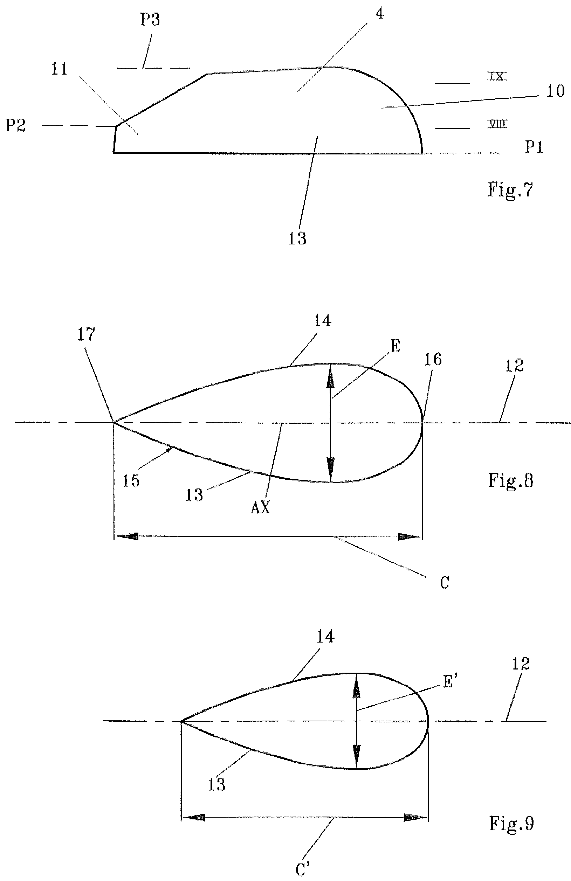

La figure 7 est une vue schématique d'une coiffe (4) qui peut être montée sur un vélo au moyen d'attaches non montrées sur le cadre du vélo ou sur le bac (avec ou sans siège) avant et/ou arrière d'un vélo cargo . Cette coiffe (4) forme une chambre intérieure formant un abri pour le cycliste ou formant un logement pour du matériel à transporter, du matériel de maintenance du vélo ou une ou des batteries lorsque le vélo est muni d'une assistance électrique. Cette coiffe (4) présente un plan de symétrie vertical (12), un axe central horizontal (AX) pour le vélo (V) en position debout avec les roues prenant appui dans un plan horizontal. En coupe transversale entre les plans horizontaux inférieur et intermédiaire (P1 et P2), la section transversale horizontale a un profil en feuille de sauge constant avec un rapport E/C de 0,18 , avec un profil en coupe transversale défini pour chaque face (13,14) par 5 arcs de cercle successifs (arc A1 du cercle C1, arc A2 du cercle , arc A3 du cercle C3, arc A4 du cercle C4, arc A5 du cercle C5) tangents et de rayon de courbure (R1,R2,R3,R4,R5) croissant avec un rayon de courbure minimal (R1) pour la partie courbe au voisinage de l'extrémité avant ou bord d'attaque (16) et un rayon de courbure maximal (R5) pour la partie courbe au voisinage de l'extrémité arrière ou queue (17), l'arc de cercle (A1) de l'extrémité avant passant par le point avant (16) étant défini avec un centre de courbure (CC1) situé dans le plan de symétrie (12) et avec un premier rayon de courbure (R1) compris entre 0,2 et 0,3 fois l'écartement maximal (E). (voir figure 10) Les centres des différents arcs de courbures (CC2 pour l'arc A2 s'étendant entre les points T1 et T2, CC3 pour l'arc A3 s'étendant entre les points T2 et T3, CC4 pour l'arc A4 s'étendant entre les points T3 et T4, CC5 pour l'arc A5 s'étendant entre les points T4 et 17 ) ne sont pas alignés le long d'une même ligne.(voir figure 10)

Entre le plan intermédiaire (P2) et le plan supérieur (P3), le profil de la section transversale est un profil en feuille de sauge du type montré à la figure 10, mais dont la corde C' et l'écartement E' diminuent au plus on se rapproche du plan supérieur (P3).

Les faces (13,14) des profilés (1,2,3,30) peuvent également être associées à des cellules photvoltaïques pour recharger une ou des batteries, en particulier pour un vélo avec assistance motorisée électrique.

## Revendications

1. Elément profilé symétrique aérodynamique pour vélo (V) à roues adapté à se déplacer au moins sur une surface définissant un plan de roulement horizontal (H) à une vitesse de moins de 100km/h, en particulier pour vélo à assistance électrique, ledit élément profilé (1,2,3,4) présentant un plan de symétrie (12) et une extrémité avant courbe (10) avec au moins un bord d'attaque, dans lequel en position de l'élément profilé avec le plan de symétrie (12) situé dans un plan vertical, ledit élément profilé (1,2,3,4) présente l'extrémité avant courbe (10), une extrémité arrière (11), et de par et d'autre dudit plan de symétrie vertical (12), une face extérieure courbe (13,14), lesdites faces extérieures courbes (13,14) définissant en section transversale dans un plan perpendiculaire au plan de symétrie (12) et parallèle audit plan de roulement, un profil aérodynamique (15), dans lequel au moins pour une partie de l'élément profilé (1,2,3,4), l'élément profilé présente en section transversale perpendiculaire au plan de symétrie (12) et parallèle audit plan de roulement (H), le profil aérodynamique (15) présentant au moins 90% de la partie centrale d'un profil en feuille de sauge avec un rapport écartement maximal (E) mesuré perpendiculairement au plan de symétrie (12) / corde maximale (C) mesurée dans le plan de symétrie (12) compris entre 0,1 et 0,3, avantageusement entre 0,1 et 0,25,
dans lequel ledit profil aérodynamique (15) avec un rapport écartement maximal (E) / corde maximale (C) compris entre 0,1 et 0,3, avantageusement entre 0,1 et 0,25 comprend deux formes ou faces courbes symétriques (13,14) par rapport audit plan de symétrie sensiblement vertical (12), chaque forme ou face courbe (13,14) desdites deux formes ou faces courbes symétriques (13,14) étant formée en section transversale entre un premier point avant (16) et un deuxième point arrière (17), lesdits premier point et deuxième point (16,17) s'étendant le long d'un axe de symétrie (AX) du plan de symétrie (12) parallèle audit plan de roulement horizontal (H),
**caractérisé en ce que** chaque forme ou face courbe (13,14) desdites deux formes ou faces courbes symétriques (13,14) dudit profil aérodynamique est définie en section transversale sensiblement par 5 à 10 arcs de cercles successifs, avantageusement 5 ou 6 ou 7 arcs de cercles successifs, de préférence 5 arcs de cercle successifs (A1,A2,A3,A4,A5), lesdits arcs de cercle successifs (A1,A2,A3,A4,A5) étant tangents intérieurs deux à deux et de rayon de courbure (R1,R2,R3,R4,R5) croissant avec un rayon de courbure minimal (R1) pour la partie courbe au voisinage de l'extrémité avant (10) et un rayon de courbure maximal (R5) pour la partie courbe au voisinage de l'extrémité arrière (11), l'arc de cercle (A1) de l'extrémité avant passant par le point avant (16) étant défini avec un centre de courbure (CC1) situé le long dudit axe de symétrie (AX) du plan de symétrie (12) et avec un premier rayon de courbure (R1) compris entre 0,2 et 0,3 fois l'écartement maximal (E),
dans lequel ladite section transversale pour ladite au moins une partie de l'élément profilé (1,2,3,4) est au moins à 95% sensiblement une section transversale définie par lesdits cinq arcs de cercles successifs, pour laquelle, par rapport au rayon de courbure (R1) du premier arc de cercle (A1),
le deuxième arc de cercle (A2) a un rayon de courbure (R2) compris entre 1,8 et 2,2 fois le premier rayon de courbure (R1);
le troisième arc de cercle (A3) a un rayon de courbure (R3) compris entre 8,5 et 10,5 fois le premier rayon de courbure (R1);
le quatrième arc de cercle (A4) a un rayon de courbure (R4) compris entre 25 et 30 fois le premier rayon de courbure (R1); et
le cinquième arc de cercle (A5) a un rayon de courbure (R5) compris entre 50 et 70 fois le premier rayon de courbure (R1).

2. Elément profilé symétrique aérodynamique selon la revendication 1, **caractérisé en ce que** les cercles définissant les 5 arcs de cercles sont des cercles tangents intérieurs deux à deux, le premier cercle (C1) définissant le premier arc de cercle (A1) étant tangent intérieur au deuxième cercle (C2), le deuxième cercle (C2) définissant le deuxième arc de cercle (A2) étant tangent intérieur au troisième cercle (C3), le troisième cercle (C3) définissant le troisième arc de cercle (A3) étant tangent intérieur au quatrième cercle (C4), et le quatrième cercle (C4) définissant le quatrième arc de cercle (A4) étant tangent intérieur au cinquième cercle (C5) définissant le cinquième arc de cercle (A5), lesdits cercles tangents intérieurs définisant une série de points de tangence distincts (T1,T2,T3,T4).

3. Elément profilé symétrique aérodynamique selon la revendication 1 ou 2, **caractérisé en ce qu'**en section transversale perpendiculaire au plan de symétrie (12) pour ladite au moins une partie de l'élément profilé (1,2,3,4), le profil aérodynamique (15) présente au moins 95% de la partie centrale d'un profil en feuille de sauge avec un rapport écartement maximal (E) mesuré perpendiculairement au plan vertical de symétrie (12) / corde maximale (C) mesurée dans le plan vertical de symétrie (12) compris entre 0,2 et 0,25.

4. Elément profilé symétrique aérodynamique selon l'une quelconque des revendications précédentes, **caractérisé en ce que** l'élément profilé (1,2,3,4) est au moins partiellement creux.

5. Elément profilé symétrique aérodynamique selon l'une quelconque des revendications précédentes, **caractérisé en ce que** par rapport au plan de symétrie vertical (12) pour le vélo (V) avec ses roues prenant appui sur le plan de roulement horizontal (H), l'élément profilé (3) présente au moins:
* une première portion de l'élément profilé (3) comprise entre, d'une part, un plan inférieur (P1) de coupe de l'élément profilé (3), ledit plan inférieur (P1) étant parallèle au plan de roulement horizontal (H), et, d'autre part, un premier plan intermédiaire (P2) de coupe de l'élément profilé (3) parallèle au plan inférieur (P1) de coupe, et
* une deuxième portion de l'élément profilé (3) comprise entre, d'une part, le premier plan intermediaire (P2) ou un éventuel deuxième plan intermédiaire (P2) de coupe parallèle au plan inférieur (P1) et différent du premier plan intermédiaire (P2), et d'autre part, un plan supérieur (P3) de coupe de l'élément profilé (3) parallèle au plan inférieur (P1) de coupe,
dans lequel le premier plan intermédiaire (P2) s'étend entre le plan inférieur (P1) et le plan supérieur (P3), tandis que l'éventuel deuxième plan intermédiaire s'étend entre le premier plan intermédiaire (P2) et le plan supérieur (P3);
dans lequel ladite première portion de l'élément profilé (3) présente, pour chaque plan de coupe parallèle au plan inférieur (P1) compris entre le plan inférieur (P1) de coupe et le premier plan intermédiaire (P2) de coupe, une section transversale en feuille de sauge sensiblement constante avec une corde (C) mesurée dans le plan de symétrie vertical (12) et un écartement (E) mesuré perpendiculairement au plan de symétrie vertical (12) sensiblement constant, avec un rapport écartement maximal (E) mesuré perpendiculairement au plan vertical de symétrie (12) / corde maximale (C) mesurée dans le plan vertical de symétrie (12) compris entre 0,1 et 0,3, avantageusement entre 0,1 et 0,25, de préférence entre 0,2 et 0,25;
dans lequel la deuxième portion de l'élément profilé (3) présente, pour chaque plan de coupe parallèle au plan inférieur (P1) compris entre le premier ou deuxième plan intermédiaire et le plan supérieur (P3), une section transversale en feuille de sauge qui varie de manière continue entre:
* une section transversale maximale en feuille de sauge le long du premier ou deuxième plan intermédiaire de coupe (P2) avec une corde maximale (C) mesurée dans le plan de symétrie vertical (12) et un écartement maximal (E) mesuré perpendiculairement au plan de symétrie vertical (12), et
* une section transversale minimale en feuille de sauge le long du plan supérieur de coupe (P3) avec une corde minimale (C') mesurée dans le plan de symétrie vertical (12) inférieure à la corde maximale (C) et un écartement minimal (E') inférieur à l'écartement maximal (E),
chaque section transversale en feuille de sauge présentant un rapport écartement maximal (E,E') mesuré perpendiculairement au plan de symétrie / corde maximale mesurée (C,C') dans le plan de symétrie (12) compris entre 0,1 et 0,3, avantageusement entre 0,1 et 0,25, de préférence entre 0,2 et 0,25.

6. Elément profilé symétrique aérodynamique selon l'une quelconque des revendications précédentes, **caractérisé en ce qu'**avec le vélo (V) en position debout avec les roues prenant appui sur le plan de roulement horizontal, il présente :
- le plan de symétrie vertical (12) et
- au moins une portion s'étendant entre, d'une part, un premier plan horizontal perpendiculaire audit plan de symétrie vertical (12) et, d'autre part, un deuxième plan horizontal perpendiculaire audit plan de symétrie vertical (12), ladite portion présentant une section transversale horizontale sensiblement constante sensiblement en feuille de sauge définie avec sensiblement une même longueur de corde (C) mesurée dans le plan de symétrie vertical (12) et un même écartement (E) mesuré perpendiculairement au plan de symétrie vertical (12).

7. Cadre (20) de vélo (V) adapté pour supporter au moins une roue avant (21) et une roue arrière (22), ledit cadre (20) comprenant au moins (a) un profilé de selle (23) avec une extrémité inférieure (23A) et une extrémité supérieure (23B) adaptée à supporter une tige de selle (24), (b) un profilé de direction (25) adapté pour recevoir une tige de direction (26) associée au moins à une fourche (27) pour la roue avant (21), et à un guidon (28), (c) un profilé diagonal (1) reliant l'extrémité inférieure (23A) du profilé de selle (23) au profilé de direction (25), et avantageusment (d) un profilé sensiblement horizontal (2) reliant l'extrémité supérieure (23B) du profilé de selle (23) audit profilé de direction (25),
ledit cadre (20) étant avantageusement associé à un hauban (31) et une base arrière (29) adaptés pour supporter la roue arrière (22), et/ou à une fourche (27) pour la roue avant (21), et/ou un garde boue avant (30) adapté pour couvrir au moins partiellement la partie haute de la roue avant (21), et/ou un garde boue arrière (3) adapté pour couvrir au moins partiellement la partie haute de la roue arrière (22) et/ou à une coiffe (4), **caractérisé en ce qu'**au moins un élément choisi parmi le profilé de selle (23), le profilé de direction (25), le profilé diagonal (1), l'éventuel profilé sensiblement horizontal (2), l'éventuel garde boue avant (30), l'éventuel garde boue arrière (3) et l'éventuelle coiffe (4), éventuellement en combinaison entre eux, est un élément profilé symétrique aérodynamique selon l'une des revendications précédentes,

8. Cadre suivant la revendication 7, **caractérisé en ce que** le profilé diagonal (1), le profilé de selle (23) et l'éventuel profilé horizontal (2) sont intégrés dans un même élément profilé selon l'une quelconque des revendications 1 à 6.

9. Vélo (V) comportant un cadre suivant la revendication 7 ou 8.

10. Vélo (V) suivant la revendication 9, pour lequel lorsqu'il est en position debout avec les roues prenant appui sur le plan de roulement horizontal (H), l'élément profilé symétrique aérodynamique d'au moins un élément choisi parmi le profilé de selle (23), le profilé de direction (25), le profilé diagonal (1), l'éventuel profilé sensiblement horizontal (2), l'éventuel garde boue avant (30), l'éventuel garde boue arrière (3) et l'éventuelle coiffe (4), éventuellement en combinaison entre eux, présente au moins une portion avec en coupe transversale horizontale une section transversale en feuille de sauge telle que définie au moins dans l'une quelconque des revendications 1 à 6.

11. Utilisation d'un vélo (V) à roues adapté pour se déplacer sur terre à une vitesse de moins de 100km/h dans un plan de roulement horizontal, en particulier un vélo à assistance électrique (V), en particulier un vélo selon la revendication 9 ou 10, ledit vélo comprenant au moins un élément profilé selon l'une quelconque des revendications 1 à 6, en particulier au moins un cadre selon la revendication 7, pour générer au moins un effort moteur compris entre 2N et 10N dans le sens d'avancement du vélo par l'effet de vents sur ledit au moins un élément profilé pour au moins des vents de vitesse comprise entre 10 km/h et 80 km/h avec une incidence au moins comprise entre 10° et 170° par rapport à la direction d'avancement du vélo, cet effort moteur engendrant avantageusement une puissance motrice qui est le produit de ladite force motrice par la vitesse d'avancement du cyliste.

## Patentansprüche

1. Aerodynamisches symmetrisches Profilelement für ein Fahrrad (V) mit Rädern, das eingerichtet ist, sich zumindest auf einer Fläche, die eine horizontale Rollebene (H) definiert, mit einer Geschwindigkeit von weniger als 100 km/h fortzubewegen; insbesondere für ein Pedelec, wobei das Profilelement (1, 2, 3, 4) eine Symmetrieebene (12) und ein gekrümmtes vorderes Ende (10) mit mindestens einer Vorderkante aufweist, an der in der Position des Profilelements, in der die Symmetrieebene (12) in einer vertikalen Ebene liegt, das Profilelement (1, 2, 3, 4) das gekrümmte vordere Ende (10), ein hinteres Ende (11) und auf jeder Seite der vertikalen Symmetrieebene (12) eine gekrümmte Außenfläche (13, 14) aufweist, wobei die gekrümmten Außenflächen (13, 14) im Querschnitt in einer Ebene senkrecht zur Symmetrieebene (12) und parallel zur Rollebene ein aerodynamisches Profil (15) definieren, wobei zumindest für einen Teil des Profilelements (1, 2, 3, 4), das Profilelement einen Querschnitt senkrecht zur Symmetrieebene (12) und parallel zur Rollebene (H) aufweist, wobei das aerodynamische Profil (15) mindestens 90 % des mittleren Teils eines Salbeiblattprofils mit einem Verhältnis maximaler Abstand (E), gemessen senkrecht zur Symmetrieebene (12)/maximale Sehne (C), gemessen in der Symmetrieebene (12), zwischen 0,1 und 0,3, vorzugsweise zwischen 0,1 und 0,25, aufweist,
wobei das aerodynamische Profil (15) mit einem Verhältnis maximaler Abstand (E)/maximale Sehne (C) zwischen 0,1 und 0,3, vorzugsweise zwischen 0,1 und 0,25, zwei symmetrisch gekrümmte Formen oder Flächen (13, 14) in Bezug auf die im Wesentlichen vertikale Symmetrieebene (12) umfasst, wobei jede gekrümmte Form oder Fläche (13, 14) der beiden symmetrisch gekrümmten Formen oder Flächen (13, 14) im Querschnitt zwischen einem ersten vorderen Punkt (16) und einem zweiten hinteren Punkt (17) ausgebildet ist, wobei sich der erste Punkt und der zweite Punkt (16, 17) entlang einer Symmetrieachse (AX) der Symmetrieebene (12) parallel zur horizontalen Rollebene (H) erstrecken,
**dadurch gekennzeichnet, dass** jede gekrümmte Form oder Fläche (13, 14) der beiden symmetrisch gekrümmten Formen oder Flächen (13, 14) des aerodynamischen Profils im Querschnitt im Wesentlichen durch 5 bis 10 aufeinanderfolgende Kreisbögen, vorteilhafterweise 5 oder 6 oder 7 aufeinanderfolgende Kreisbögen, vorzugsweise 5 aufeinanderfolgende Kreisbögen (A1, A2, A3, A4, A5) definiert wird, wobei die aufeinanderfolgenden Kreisbögen (A1, A2, A3, A4, A5) einander innen tangieren und einen zunehmenden Krümmungsradius (R1, R2, R3, R4, R5) mit einem minimalen Krümmungsradius (R1) für den gekrümmten Teil in der Nähe des vorderen Endes (10) und einem maximalen Krümmungsradius (R5) für den gekrümmten Teil in der Nähe des hinteren Endes (11) aufweisen, der Kreisbogen (A1) des vorderen Endes, der durch den vorderen Punkt (16) verläuft, ist mit einem Krümmungsmittelpunkt (CC1), der entlang der Symmetrieachse (AX) der Symmetrieebene (12) liegt, und mit einem ersten Krümmungsradius (R1) definiert ist, der zwischen dem 0,2- und 0,3-fachen des maximalen Abstands (E) liegt,
wobei der Querschnitt für den mindestens einen Teil des Profilelements (1, 2, 3, 4) mindestens im Wesentlichen zu 95 % ein Querschnitt ist, der durch die fünf aufeinanderfolgenden Kreisbögen definiert ist, für den, bezogen auf den Krümmungsradius (R1) des ersten Kreisbogens (A1),
der zweite Kreisbogen (A2) einen Krümmungsradius (R2) hat, der zwischen dem 1,8- und 2,2-fachen des ersten Krümmungsradius (R1) liegt;
der dritte Kreisbogen (A3) einen Krümmungsradius (R3) hat, der zwischen dem 8,5- und 10,5-fachen des ersten Krümmungsradius (R1) liegt;
der vierte Kreisbogen (A4) einen Krümmungsradius (R4) hat, der zwischen dem 25- und 30-fachen des ersten Krümmungsradius (R1) liegt; und
der fünfte Kreisbogen (A5) einen Krümmungsradius (R5) hat, der zwischen dem 50- und 70-fachen des ersten Krümmungsradius (R1) liegt.

2. Aerodynamisches symmetrisches Profilelement nach Anspruch 1, **dadurch gekennzeichnet, dass** die Kreise, die die 5 Kreisbögen definieren, paarweise innere Tangentenkreise sind, wobei der erste Kreis (C1), der den ersten Kreisbogen (A1) definiert, eine innere Tangente an dem zweiten Kreis (C2) ist, der zweite Kreis (C2), der den zweiten Kreisbogen (A2) definiert, eine innere Tangente an dem dritten Kreis (C3) ist, der dritte Kreis (C3), der den dritten Kreisbogen (A3) definiert, eine innere Tangente an dem vierten Kreis (C4) ist, und der vierte Kreis (C4), der den vierten Kreisbogen (A4) definiert, eine innere Tangente an dem fünften Kreis (C5) ist, der den fünften Kreisbogen (A5) definiert, wobei die inneren Tangentenkreise eine Reihe von unterschiedlichen Tangentenpunkten (T1, T2, T3, T4) definieren.

3. Aerodynamisches symmetrisches Profilelement nach Anspruch 1 oder 2, **dadurch gekennzeichnet, dass** im Querschnitt senkrecht zur Symmetrieebene (12) für den mindestens einen Teil des Profilelements (1, 2, 3, 4), das aerodynamische Profil (15) mindestens 95 % des mittleren Teils eines Salbeiblattprofils mit einem Verhältnis maximaler Abstand (E), gemessen senkrecht zur vertikalen Symmetrieebene (12)/ maximale Sehne (C), gemessen in der vertikalen Symmetrieebene (12), zwischen 0,2 und 0,25 aufweist.

4. Aerodynamisches symmetrisches Profilelement nach einem der vorhergegangenen Ansprüche, **dadurch gekennzeichnet, dass** das Profilelement (1, 2, 3, 4) zumindest teilweise hohl ist.

5. Aerodynamisches symmetrisches Profilelement nach einem der vorhergegangenen Ansprüche, **dadurch gekennzeichnet, dass** das Profilelement (3) in Bezug auf die vertikale Symmetrieebene (12) für das Fahrrad (V) mit seinen Rädern, die sich auf der horizontalen Rollebene (H) abstützen, mindestens Folgendes aufweist:
* einen ersten Abschnitt des Profilelements (3), der zwischen einerseits einer unteren Schnittebene (P1) des Profilelements (3), wobei die untere Ebene (P1) parallel zur horizontalen Rollebene (H) ist, und andererseits einer ersten Zwischenschnittebene (P2) des Profilelements (3), die parallel zur unteren Schnittebene (P1) ist, liegt, und
* einen zweiten Abschnitt des Profilelements (3), der zwischen einerseits der ersten Zwischenebene (P2) oder einer eventuellen zweiten Zwischenschnittebene (P2), die parallel zur unteren Ebene (P1) verläuft und sich von der ersten Zwischenebene (P2) unterscheidet, und andererseits einer oberen Schnittebene (P3) des Profilelements (3), die parallel zur unteren Schnittebene (P1) verläuft, liegt,
wobei die erste Zwischenebene (P2) sich zwischen der unteren Ebene (P1) und der oberen Ebene (P3) erstreckt, während die mögliche zweite Zwischenebene sich zwischen der ersten Zwischenebene (P2) und der oberen Ebene (P3) erstreckt;
wobei der erste Abschnitt des Profilelements (3) für jede Schnittebene parallel zur unteren Ebene (P1), die zwischen der unteren Schnittebene (P1) und der ersten Zwischenschnittebene (P2) liegt, einen im Wesentlichen konstanten Querschnitt in Form eines Salbeiblatts mit einer in der vertikalen Symmetrieebene (12) gemessenen Sehne (C) und einem senkrecht zur vertikalen Symmetrieebene (12) gemessenen, im Wesentlichen konstanten Abstand (E) aufweist, mit einem Verhältnis maximaler Abstand (E), gemessen senkrecht zur vertikalen Symmetrieebene (12)/maximale Sehne (C), gemessen in der vertikalen Symmetrieebene (12), zwischen 0,1 und 0,3, vorteilhaft zwischen 0,1 und 0,25, vorzugsweise zwischen 0,2 und ,25;
wobei der zweite Abschnitt des Profilelements (3) für jede Schnittebene parallel zur unteren Ebene (P1), die zwischen der ersten oder zweiten Zwischenebene und der oberen Ebene (P3) liegt, einen Salbeiblatt-Querschnitt aufweist, der kontinuierlich variiert zwischen:
* einem maximalen Salbeiblatt-Querschnitt entlang der ersten oder zweiten Zwischenschnittebene (P2) mit einer maximalen Sehne (C), gemessen in der vertikalen Symmetrieebene (12), und einem maximalen Abstand (E), gemessen senkrecht zur vertikalen Symmetrieebene (12), und
* einem minimalen Salbeiblatt-Querschnitt entlang der oberen Schnittebene (P3) mit einer minimalen Sehne (C'), gemessen in der vertikalen Symmetrieebene (12), die kleiner ist als die maximale Sehne (C), und einem minimalen Abstand (E') kleiner als der maximale Abstand (E),
wobei jeder Salbeiblatt-Querschnitt ein Verhältnis maximaler Abstand (E, E'), gemessen senkrecht zur Symmetrieebene/maximale Sehne (C, C'), gemessen in der Symmetrieebene (12), zwischen 0,1 und 0,3, vorteilhafterweise zwischen 0,1 und 0,25, vorzugsweise zwischen 0,2 und 0,25, aufweist.

6. Aerodynamisches symmetrisches Profilelement nach einem der vorhergegangenen Ansprüche, **dadurch gekennzeichnet, dass** es bei dem Fahrrad (V) in aufrechter Position, dessen Räder sich auf der horizontalen Rollebene abstützen, Folgendes aufweist:
- die vertikale Symmetrieebene (12) und
- mindestens einen Abschnitt, der sich zwischen einerseits einer ersten horizontalen Ebene senkrecht zur vertikalen Symmetrieebene (12) und andererseits einer zweiten horizontalen Ebene senkrecht zur vertikalen Symmetrieebene (12) erstreckt, wobei der Abschnitt einen im Wesentlichen konstanten horizontalen Querschnitt im Wesentlichen in Form eines Salbeiblatts aufweist, das mit im Wesentlichen der gleichen Sehnenlänge (C), gemessen in der vertikalen Symmetrieebene (12), und dem gleichen Abstand (E), gemessen senkrecht zur vertikalen Symmetrieebene (12), definiert ist.

7. Rahmen (20) eines Fahrrads (V), der eingerichtet ist, mindestens ein Vorderrad (21) und ein Hinterrad (22) zu tragen, wobei der Rahmen (20) mindestens umfasst (a) ein Sattelprofil (23) mit einem unteren Ende (23A) und einem oberen Ende (23B), das eingerichtet ist, eine Sattelstütze (24) zu tragen, (b) ein Lenkprofil (25), das eingerichtet ist, eine Lenkstange (26) aufzunehmen, die mindestens mit einer Gabel (27) für das Vorderrad (21) und einem Lenker (28) zu verbinden ist, (c) ein Diagonalprofil (1), welches das untere Ende (23A) des Sattelprofils (23) mit dem Lenkprofil (25) verbindet, und vorteilhafterweise (d) ein im Wesentlichen horizontales Profil (2), welches das obere Ende (23B) des Sattelprofils (23) mit dem Lenkprofil (25) verbindet,
wobei der Rahmen (20) vorteilhaft mit einer Strebe (31) und einer hinteren Basis (29) verbunden ist, die eingerichtet sind, das Hinterrad (22) zu tragen, und/oder mit einer Gabel (27) für das Vorderrad (21), und/oder mit einem vorderen Schutzblech (30), das eingerichtet ist, zumindest teilweise den oberen Teil des Vorderrads (21) abzudecken, und/oder mit einem hinteren Schutzblech (3), das eingerichtet ist, zumindest teilweise den oberen Teil des Hinterrads (22) abzudecken, und/oder mit einer Kappe (4), **dadurch gekennzeichnet, dass** mindestens ein Element, ausgewählt aus dem Sattelprofil (23), dem Lenkprofil (25), dem Diagonalprofil (1), dem eventuellen im Wesentlichen horizontalen Profil (2), dem eventuellen vorderen Schutzblech (30), dem eventuellen hinteren Schutzblech (3) und der eventuellen Kappe (4), gegebenenfalls in Kombination miteinander, ein aerodynamisches symmetrisches Profilelement nach einem der vorhergehenden Ansprüche ist.

8. Rahmen nach Anspruch 7, **dadurch gekennzeichnet, dass** das Diagonalprofil (1), das Sattelprofil (23) und das eventuelle horizontale Profil (2) in einem einzigen Profilelement nach einem der Ansprüche 1 bis 6 integriert sind.

9. Fahrrad (V) umfassend einen Rahmen nach Anspruch 7 oder 8.

10. Fahrrad (V) nach Anspruch 9, bei dem in aufrechter Positionmit den Rädern auf der horizontalen Rollebene (H) das aerodynamische symmetrische Profilelement des mindestens einen Elements, ausgewählt aus dem Sattelprofil (23), dem Lenkprofil (25), dem Diagonalprofil (1), dem eventuellen im Wesentlichen horizontalen Profil (2), dem eventuellen vorderen Schutzblech (30), dem eventuellen hinteren Schutzblech (3) und der eventuellen Kappe (4), gegebenenfalls in Kombination miteinander, mindestens einen Abschnitt mit einem horizontalen Querschnitt in Form eines Salbeiblattes, wie mindestens in einem der Ansprüche 1 bis 6 definiert, aufweist.

11. Verwendung eines Fahrrads (V) mit Rädern, das eingerichtet ist, sich auf dem Boden mit einer Geschwindigkeit von weniger als 100 km/h in einer horizontalen Rollebene fortzubewegen, insbesondere eines Pedelecs (V), insbesondere eines Fahrrads nach Anspruch 9 oder 10, umfassend mindestens ein Profilelement nach einem der Ansprüche 1 bis 6, insbesondere mindestens einen Rahmen nach Anspruch 7, um mindestens eine Antriebskraft zwischen 2N und 10N in der Fahrtrichtung des Fahrrads durch die Wirkung von Winden auf das mindestens eine Profilelement für mindestens Winde mit einer Geschwindigkeit zwischen 10 km/h und 80 km/h mit einem Anstellwinkel zwischen mindestens 10° und 170° in Bezug auf die Fahrtrichtung des Fahrrads zu erzeugen, wobei diese Antriebskraft vorteilhafterweise eine Antriebsleistung erzeugt, die das Produkt aus der Antriebskraft und der Fahrgeschwindigkeit des Fahrers ist.

## Claims

1. An aerodynamic symmetrical profiled element for a wheeled bicycle (V) adapted to move at least on a surface defining a horizontal rolling plane (H) at a speed of less than 100km/h, in particular for an electrically assisted bicycle, said profiled element (1,2,3,4) having a plane of symmetry (12) and a curved front end (10) with at least one leading edge, wherein in the position of the profiled element with the plane of symmetry (12) lying in a vertical plane, said profiled element (1,2,3,4) has the curved front end (10), a rear end (11), and on either side of said vertical plane of symmetry (12), a curved outer face (13,14), the said curved outer faces (13,14) defining, in cross-section in a plane perpendicular to the plane of symmetry (12) and parallel to the said rolling plane, an aerodynamic profile (15), in which at least for part of the profiled element (1,2,3,4), the profiled element has, in cross-section perpendicular to the plane of symmetry (12) and parallel to the said rolling plane (H), the aerodynamic profile (15) having at least 90% of the central part of a sage leaf profile with a ratio of maximum spacing (E) measured perpendicular to the plane of symmetry (12) to maximum chord (C) measured in the plane of symmetry (12) of between 0.1 and 0.3, advantageously between 0.1 and 0.25,
in which said aerodynamic profile (15) with a maximum spacing (E) / maximum chord (C) ratio of between 0.1 and 0.3, advantageously between 0.1 and 0.25, comprises two symmetrical curved shapes or faces (13,14) with respect to said substantially vertical plane of symmetry (12), each curved shape or face (13,14) of said two symmetrical curved shapes or faces (13,14) being formed in cross-section between a first front point (16) and a second rear point (17), said first and second points (16,17) extending along an axis of symmetry (AX) of the plane of symmetry (12) parallel to said horizontal rolling plane (H),
**characterised in that** each curved shape or face (13,14) of said two symmetrical curved shapes or faces (13,14) of said aerodynamic profile is defined in cross-section substantially by 5 to 10 successive arcs of circles, advantageously 5 or 6 or 7 successive arcs of circles, preferably 5 successive arcs of circles (A1,A2,A3,A4,A5), said successive arcs of circles (A1,A2,A3,A4,A5) being inwardly tangential in pairs and of radius of curvature (R1,R2,R3,R4,R5) increasing with a minimum radius of curvature (R1) for the curved part in the vicinity of the front end (10) and a maximum radius of curvature (R5) for the curved part in the vicinity of the rear end (11), the arc of a circle (A1) of the front end passing through the front point (16) being defined with a centre of curvature (CC1) located along the said axis of symmetry (AX) of the plane of symmetry (12) and with a first radius of curvature (R1) of between 0.2 and 0.3 times the maximum spacing (E),
wherein said cross-section for said at least part of the profiled element (1,2,3,4) is at least 95% substantially a cross-section defined by said five successive arcs of circle, for which, relative to the radius of curvature (R1) of the first arc of circle (A1)
the second arc of circle (A2) has a radius of curvature (R2) of between 1.8 and 2.2 times the first radius of curvature (R1);
the third arc of circle (A3) has a radius of curvature (R3) of between 8.5 and 10.5 times the first radius of curvature (R1);
the fourth arc of circle (A4) has a radius of curvature (R4) between 25 and 30 times the first radius of curvature (R1); and
the fifth arc of circle (A5) has a radius of curvature (R5) of between 50 and 70 times the first radius of curvature (R1).

2. A symmetrical aerodynamic profiled element as claimed in claim 1, **characterised in that** the circles defining the 5 arcs of circles are circles which are tangent inwards in pairs, the first circle (C1) defining the first arc of circle (A1) being tangent inwards to the second circle (C2), the second circle (C2) defining the second arc of circle (A2) being tangent inwards to the third circle (C3), the third circle (C3) defining the third arc of circle (A3) being tangent inwards to the fourth circle (C4), and the fourth circle (C4) defining the fourth arc of circle (A4) being tangent inwards to the fifth circle (C5) defining the fifth arc of circle (A5), said interior tangent circles defining a series of distinct points of tangency (T1,T2,T3,T4).

3. Symmetrical aerodynamic profiled element according to Claim 1 or 2, **characterised in that** in cross-section perpendicular to the plane of symmetry (12) for said at least one part of the profiled element (1,2,3,4), the aerodynamic profile (15) has at least 95% of the central part of a sage leaf profile with a ratio of maximum spacing (E) measured perpendicular to the vertical plane of symmetry (12) to maximum chord (C) measured in the vertical plane of symmetry (12) of between 0.2 and 0.25.

4. A symmetrical aerodynamic profiled element according to any one of the preceding claims, **characterised in that** the profiled element (1,2,3,4) is at least partially hollow.

5. An aerodynamically symmetrical profiled element according to any one of the preceding claims, **characterised in that** relative to the vertical plane of symmetry (12) for the bicycle (V) with its wheels resting on the horizontal rolling plane (H), the profiled element (3) has at least:
* a first portion of the profiled element (3) comprised between, on the one hand, a lower cutting plane (P1) of the profiled element (3), said lower plane (P1) being parallel to the horizontal rolling plane (H), and, on the other hand, a first intermediate cutting plane (P2) of the profiled element (3) parallel to the lower cutting plane (P1), and
* a second portion of the profiled element (3) between, on the one hand, the first intermediate plane (P2) or a possible second intermediate cutting plane (P2) parallel to the lower plane (P1) and different from the first intermediate plane (P2) and, on the other hand, an upper cutting plane (P3) of the profiled element (3) parallel to the lower cutting plane (P1),
in which the first intermediate plane (P2) extends between the lower plane (P1) and the upper plane (P3), while the possible second intermediate plane extends between the first intermediate plane (P2) and the upper plane (P3);
in which the said first portion of the profiled element (3) has, for each cutting plane parallel to the lower plane (P1) between the lower cutting plane (P1) and the first intermediate cutting plane (P2), a substantially constant sage-leaf cross-section with a chord (C) measured in the vertical plane of symmetry (12) and a substantially constant spacing (E) measured perpendicular to the vertical plane of symmetry (12), with a ratio of maximum spacing (E) measured perpendicular to the vertical plane of symmetry (12) to maximum chord (C) measured in the vertical plane of symmetry (12) of between 0.1 and 0.3, advantageously between 0.1 and 0.25, preferably between 0.2 and 0.25;
in which the second portion of the profiled element (3) has, for each cutting plane parallel to the lower plane (P1) between the first or second intermediate plane and the upper plane (P3), a sage leaf cross-section which varies continuously between:
* a maximum sage leaf cross-section along the first or second intermediate cutting plane (P2) with a maximum chord (C) measured in the vertical plane of symmetry (12) and a maximum spacing (E) measured perpendicular to the vertical plane of symmetry (12), and
* a minimum sage leaf cross-section along the upper cutting plane (P3) with a minimum chord (C') measured in the vertical plane of symmetry (12) less than the maximum chord (C) and a minimum spacing (E') less than the maximum spacing (E),
each sage leaf cross-section having a ratio of maximum spacing (E,E') measured perpendicular to the plane of symmetry to maximum chord (C,C') measured in the plane of symmetry (12) of between 0.1 and 0.3, advantageously between 0.1 and 0.25, preferably between 0.2 and 0.25.

6. Symmetrical aerodynamic profiled element according to any one of the preceding claims, **characterised in that** with the bicycle (V) in the upright position with the wheels resting on the horizontal rolling plane, it has :
- the vertical plane of symmetry (12) and
- at least one portion extending between, on the one hand, a first horizontal plane perpendicular to said vertical plane of symmetry (12) and, on the other hand, a second horizontal plane perpendicular to said vertical plane of symmetry (12), said portion having a substantially constant horizontal cross-section substantially in the form of a sage leaf defined with substantially the same chord length (C) measured in the vertical plane of symmetry (12) and the same spacing (E) measured perpendicular to the vertical plane of symmetry (12).

7. Frame (20) for a bicycle (V) adapted to support at least a front wheel (21) and a rear wheel (22), said frame (20) comprising at least (a) a seat profile (23) with a lower end (23A) and an upper end (23B) adapted to support a seat post (24), (b) a steering profile (25) adapted to receive a steering stem (26) associated at least with a fork (27) for the front wheel (21) and a handlebar (28), (c) a diagonal profile (1) connecting the lower end (23A) of the seat profile (23) to the steering profile (25), and advantageously (d) a substantially horizontal profile (2) connecting the upper end (23B) of the seat profile (23) to said steering profile (25),
said frame (20) being advantageously associated with a seat stay (31) and a rear chainstay (29) adapted to support the rear wheel (22), and/or with a fork (27) for the front wheel (21), and/or with a front mudguard (30) adapted to cover at least partially the upper part of the front wheel (21), and/or with a rear mudguard (3) adapted to cover at least partially the upper part of the rear wheel (22) and/or with a cap (4), **characterised in that** at least one element selected from the seat profile (23), the steering profile (25), the possible diagonal profile (1), the possible substantially horizontal profile (2), the possible front mudguard (30), the possible rear mudguard (3) and the possible cover (4), possibly in combination with each other, is an aerodynamic symmetrical profile element according to any one of the preceding claims.

8. Frame according to claim 7, **characterised in that** the diagonal profile (1), the seat profile (23) and the possible horizontal profile (2) are integrated into the same profile element according to any one of the claims 1 to 6.

9. Bicycle (V) comprising a frame according to claim 7 or 8.

10. Bicycle (V) according to claim 9, for which when it is in the upright position with the wheels resting on the horizontal rolling plane (H), the aerodynamically symmetrical profiled element of at least one element selected from among the seat profile (23), the steering profile (25), the diagonal profile (1), the possible substantially horizontal profile (2), the possible front mudguard (30), the possible rear mudguard (3) andthe possible cover (4), possibly in combination with each other, has at least one portion with, in horizontal cross-section, a sage leaf cross-section as defined at least in any one of the claims 1 to 6.

11. Use of a wheeled bicycle (V) adapted to travel on land at a speed of less than 100km/h in a horizontal rolling plane, in particular an electrically assisted bicycle (V), in particular a bicycle according to claim 9 or 10, said bicycle comprising at least one profiled element according to any one of the claims 1 to 6, in particular at least one frame according to claim 7, in order to generate at least one driving force of between 2N and 10N in the direction of forward travel of the bicycle by the effect of winds on the said at least one profiled element for at least wind speeds of between 10 km/h and 80 km/h with an incidence of at least between 10° and 170° relative to the direction of forward travel of the bicycle, this driving force advantageously generating a driving power which is the product of the said driving force and the forward speed of the rider.
